# EUROPEAN PATENT APPLICATION

(11) **EP 4 650 786 A1**
(43) Date of publication of application: **19.11.2025**
(21) Application number: 24858166.2
(22) Date of filing: 25.07.2024
(51) Int. Cl.: G01P 21/02

(54) **INDEPENDENT REDUNDANT WHEEL SPEED PROCESSING SYSTEM AND METHOD**

(30) Priority: 31.08.2023 CN 202311124305
(71) Applicant: Wuhu Bethel Electronic Control System Co., Ltd., Wuhu, Anhui 241008 (CN)
(72) Inventor: HAN, Lin, Wuhu, Anhui 241008 (CN); XU, Fen, Wuhu, Anhui 241008 (CN); WU, Liquan, Wuhu, Anhui 241008 (CN)
(74) Representative: Canzler & Bergmeier Patentanwälte Partnerschaft mbB
(86) International application number: PCT/CN2024/107613
(87) International publication number: WO 2025/044623

(57) **Abstract**

An independent redundant wheel speed processing system, comprising four wheel speed sensors (1, 2, 3, 4) respectively provided on four wheels, the four wheel speed sensors (1, 2, 3, 4) being in communication connection to an MCU by means of four wheel speed signal processing units respectively. The four wheel speed signal processing units respectively perform diagnosis of driving anomalies and wheel speed signal anomalies of the four wheel speed sensors (1, 2, 3, 4) and send to the MCU diagnosis results. Thus, using the independent wheel speed signal processing units can ensure the function safety requirement and the function redundancy requirement of brake systems, thereby reducing the high cost of brake systems. Further provided is an independent redundant wheel speed processing method based on the independent redundant wheel speed processing system.

## Description

### FIELD OF THE INVENTION

The present invention relates to the field of vehicle control technology, and more specifically, to an independent redundant wheel speed processing system and method.

### BACKGROUND OF THE INVENTION.

Vehicle's brake controller needs to detect wheel speed signals from four wheel speed sensors to enable a braking system to perform driving brake control, parking brake control, and vehicle stability control functions. After processing and monitoring the input signals, each sub-function module calculates the wheel speeds, vehicle speed, and slip ratio based on the processed signals, then outputs the results to drive brake actuators and control other actuators through signals.

To comply with functional safety standards, wheel speed sensor detection circuits in the brake controller are required to satisfy specific diagnostic coverage and hardware failure rate criteria. For vehicles equipped with autonomous driving functions, the braking systems must incorporate functional redundancy, and thus, wheel speed sensors should also be designed with redundancy.

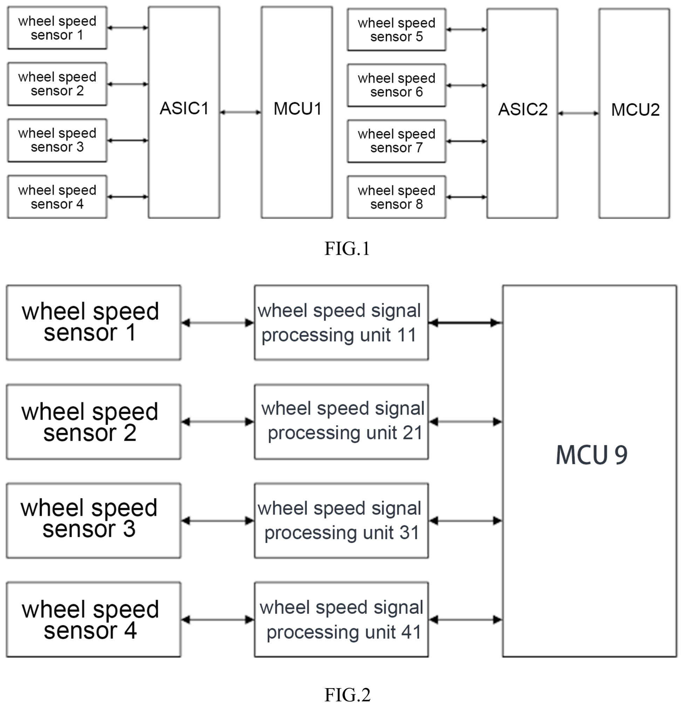

The current design employs highly integrated wheel speed acquisition chips, each configured to collect signals from four wheel speed sensors. However, a failure of a single chip may lead to the loss of signals from all four connected sensors. To ensure functional redundancy, each vehicle is equipped with two acquisition chips and a total of eight wheel speed sensors-two per wheel, as illustrated in FIG. 1. While this design adds hardware to ensure functional safety and redundancy, it also considerably increases the overall cost of the vehicles' braking systems.

### SUMMARY OF THE INVENTION

The present invention provides an independent redundant wheel speed processing system and method.

The independent redundant wheel speed processing system includes four wheel speed sensors respectively disposed on four wheels and four wheel speed signal processing units.

The four wheel speed sensors are respectively in communication with an MCU through the four wheel speed signal processing units.

Each of the four wheel speed signal processing units diagnoses drive abnormalities and wheel speed signal abnormalities of one of the four wheel speed sensors, and transmits diagnostic results as well as valid wheel speed signals output by the one of the wheel speed sensors to the MCU.

Furthermore, each of the four wheel speed signal processing units includes a drive diagnostic module which diagnoses the drive abnormalities of the one of the wheel speed sensors. The drive diagnostic module includes a high-side drive diagnostic submodule and a low-side drive diagnostic submodule.

The high-side drive diagnostic submodule performs a high-side drive fault diagnostic on the one of the wheel speed sensors based on a high-side voltage.

The low-side drive diagnostic submodule performs a fault diagnostic on output signals of the one of the wheel speed sensors based on an acquisition circuit. The acquisition circuit and a power supply circuit are independently connected to the one of the wheel speed sensors. The power supply circuit provides power to the one of the wheel speed sensors, and the acquisition circuit acquires wheel speed signals.

Furthermore, a method for performing the high-side drive fault diagnostic includes the following steps.

An ADC sampling circuit is provided on a high-side of each of the wheel speed sensors to sample an ADC value of a voltage of the wheel speed sensor. An operating voltage corresponding to the sampled ADC value is then verified with a reference voltage output by the MCU to determine whether the operating voltage of the wheel speed sensor falls within a valid operating voltage range. Upon the operating voltage of the wheel speed sensor being within the valid operating voltage range, a high-side drive of the wheel speed sensor is deemed to be normal.

Furthermore, each of the wheel speed signal processing units includes a wheel speed diagnostic module which diagnoses the wheel speed signal abnormalities, and a method for diagnosing the wheel speed signal abnormalities includes the following steps.

An interface is provided for inputting wheel speed pulse signals from the one of the wheel speed sensors, and an ADC acquisition circuit is provided at the interface to acquire the wheel speed pulse signals. Amplitudes of the wheel speed pulse signals are then diagnosed to determine whether the amplitudes fall within a preset amplitude range. Upon the amplitudes of the wheel speed pulse signals falling within the preset amplitude range, the wheel speed signals output by the one of the wheel speed sensors are deemed valid.

Furthermore, the MCU integrates a wheel speed signal verification module which receives the valid wheel speed signals sent by the four wheel speed signal processing units and performs a verification process on the valid wheel speed signals.

Furthermore, a method for performing the verification process on the valid wheel speed signals includes the following steps.

The valid wheel speed signals during steady driving are read to examine deviations between the valid wheel speed signals. Upon the deviations between one of the valid wheel speed signals and each of the remaining wheel speed signals exceeding a preset deviation threshold, the corresponding valid wheel speed signal is determined to be faulty.

Furthermore, the independent redundant wheel speed processing system further includes two MCUs: a main MCU and a secondary MCU.

Output terminals of the four wheel speed signal processing units are connected to the main MCU and the secondary MCU.

The main MCU and the secondary MCU respectively calculate first and second computed wheel speed signals of the wheel speed sensors based on valid wheel speed pulse signals output by a wheel speed signal verification module.

Furthermore, the secondary MCU transmits the second computed wheel speed signals of the wheel speed sensors to the main MCU. Upon the first computed wheel speed signals and the second computed wheel speed signals matching, the main MCU is determined to be operating normally.

The present invention further provides an independent redundant wheel speed processing method. The method includes:

S1. collecting high-side voltage signals of the four wheel speed sensors and output signals from the acquisition circuits, performing high-side drive fault diagnostics on the wheel speed sensors based on the high-side voltage signals, and performing low-side drive fault diagnostics on the acquisition circuits based on the output signals of the acquisition circuits;

S2. upon a high-side drive fault or a low-side drive fault being verified, determining a corresponding wheel speed sensor fault; upon neither high-side drive fault nor low-side drive fault being verified in the wheel speed sensors, proceeding to step S3;

S3. detecting the validity of wheel speed information output by the wheel speed sensors, upon the wheel speed information being valid, proceeding to step S4; upon the wheel speed information being invalid, determining that both status and signal of the wheel speed sensor corresponding to invalid wheel speed information are faulty;

S4. Performing a verification process on valid wheel speed information by the MCU, upon detecting a failed wheel speed signal, determining that the wheel speed sensor corresponding to the failed wheel speed signal is faulty.

The present invention ensures the functional safety and redundancy requirements of the braking system by providing independent and discrete wheel speed signal processing units, while also reducing the high costs incurred by using highly integrated chips to fulfill these requirements.

### BRIEF DESCRIPTION OF DRAWINGS

FIG.1 is a block diagram of an existing wheel speed sensor interface hardware architecture.
FIG.2 is a schematic structural diagram of an independent redundant wheel speed processing system with a single MCU according to an embodiment of the present invention.
FIG.3 is a schematic structural diagram of an independent redundant wheel speed processing system with dual MCUs according to an embodiment of the present invention.
FIG.4 is a flowchart of an independent redundant wheel speed processing method according to an embodiment of the present invention.

### DETAILED DESCRIPTION

Specific embodiments of the present invention are described in detail below with reference to the accompanying drawings, to assist a person skilled in the art in gaining a more complete, accurate, and in-depth understanding of the inventive concept and technical solutions of the present invention.

FIG. 2 is a schematic structural diagram of an independent redundant wheel speed processing system according to an embodiment of the present invention. For clarity, only the parts related to the embodiments of the present invention are shown. The independent redundant wheel speed processing system includes four wheel speed sensors 1,2,3,4 respectively disposed on four wheels.

The four wheel speed sensors 1,2,3,4 include a wheel speed sensor 1, a wheel speed sensor 2, a wheel speed sensor 3, and a wheel speed sensor 4. The four wheel speed sensors 1,2,3,4 are respectively in communication with an MCU 9 through four wheel speed signal processing units 11,21,31,41.

The four wheel speed signal processing units 11,21,31,41 respectively diagnose drive abnormalities and wheel speed signal abnormalities of the four wheel speed sensors 1,2,3,4, and send diagnostic results as well as wheel speed signals output by the wheel speed sensors 1,2,3,4 to the MCU 9.

In the embodiments of the present invention, each of the wheel speed sensors 1,2,3,4 is connected to one of the wheel speed signal processing units 11,21,31,41. Each wheel speed signal processing unit 11,21,31,41 includes a drive diagnostic module and a wheel speed diagnostic module. The drive diagnostic module and the wheel speed diagnostic module respectively diagnose the drive abnormalities and the wheel speed signal abnormalities of the corresponding wheel speed sensor, and then upload the diagnostic results to the MCU 9.

The drive diagnostic module includes a high-side drive diagnostic submodule and a low-side drive diagnostic submodule.
(1) The high-side drive diagnostic submodule performs a high-side drive fault diagnostic on the corresponding wheel speed sensor based on a high-side voltage.
   An ADC sampling circuit is provided on a high-side of the corresponding wheel speed sensor to sample an ADC value of the high-side voltage of the corresponding wheel speed sensor. An operating voltage corresponding to the sampled ADC value is then verified with a reference voltage output by the MCU 9 to determine whether the operating voltage of the corresponding wheel speed sensor falls within a valid operating voltage range. If the operating voltage of the corresponding wheel speed sensor is within the valid operating voltage range, a high-side drive of the corresponding wheel speed sensor is considered to be normal.
(2) The low-side drive diagnostic submodule performs a low-side drive fault diagnostic on the corresponding wheel speed sensor based on output information of an acquisition circuit.

The independent redundant wheel speed processing system further includes four power supply circuits which supply power to the four wheel speed sensors 1,2,3,4, and four acquisition circuits which collect signals from the four wheel speed sensors 1,2,3,4. If one of the acquisition circuits or power supply circuits is faulty, the power supply and signal acquisition for the remaining three wheel speed sensors 1,2,3,4 remain unaffected.

Whether the acquisition circuits are faulty is diagnosed by the low-side drive diagnostic submodule, and four low-side drive diagnostic submodules are provided to correspond to the four wheel speed sensors 1,2,3,4.

(3) The wheel speed diagnostic module performs a wheel speed signal diagnostic.

An interface is provided for inputting wheel speed pulse signals from the corresponding wheel speed sensor, and an ADC acquisition circuit is provided at the interface to sample the wheel speed pulse signals. Amplitudes of the wheel speed pulse signals are then diagnosed to determine whether the amplitudes fall within a preset amplitude range. If the amplitudes of the wheel speed pulse signals fall within the preset amplitude range, the wheel speed signals output by the corresponding wheel speed sensor are deemed valid, and a pulse drive of the corresponding wheel speed sensor is deemed normal.

In the embodiments of the present invention, the MCU 9 integrates a wheel speed signal verification module, which receives the valid wheel speed signals sent by the four wheel speed signal processing units 11,21,31,41 and performs a verification process on the valid wheel speed signals. Specifically, the verification process includes reading the valid wheel speed signals during steady driving and examining deviations between the valid wheel speed signals. A wheel speed signal is deemed invalid if the deviation between the wheel speed signal and each of the remaining wheel speed signals exceeds a preset threshold, indicating that the wheel speed sensor signal is not an actual wheel speed signal, but an invalid signal.

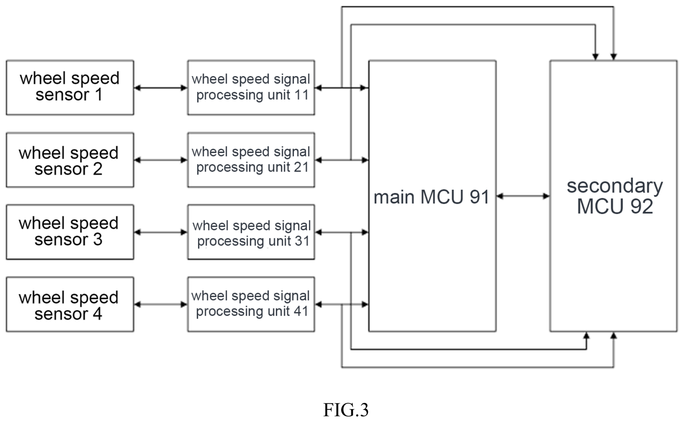

FIG.3 is a schematic structural diagram of an independent redundant wheel speed processing system with dual MCUs according to an embodiment of the present invention. For clarity, only the parts related to the embodiments of the present invention are shown. The independent redundant wheel speed processing system includes two MCUs: a main MCU 91 and a secondary MCU 92.

Output terminals of the four wheel speed signal processing units 11,21,31,41 are connected to the main MCU 91 and the secondary MCU 92.

The main MCU 91 calculates first computed wheel speed signals of the wheel speed sensors 1,2,3,4 based on valid wheel speed pulse signals output by the wheel speed signal verification module.

The secondary MCU 92 calculates second computed wheel speed signals of the wheel speed sensors 1,2,3,4 and simultaneously acquires speed directions of the wheel speed sensors 1,2,3,4 based on the valid wheel speed pulse signals output by the wheel speed signal verification module. The second computed wheel speed signals and the speed directions are then transmitted to the main MCU 91 for verification. If the first and second computed wheel speed signals match, the main MCU 91 is determined to be operating normally.

In the embodiments of the present invention, if the main MCU 91 is faulty while the secondary MCU 92 operates normally, the secondary MCU 92 can continue to process the valid wheel speed pulse signals output by the wheel speed signal processing units, and transmit processed wheel speed signals to an electronic control unit that requires the wheel speed signals via a CAN interface.

The independent redundant wheel speed processing system provided by the present invention has the following beneficial technical effects.
(1) The present invention replaces high-integration chips with four independent wheel speed signal processing units 11,21,31,41 to collect wheel speed signals. From a functional safety perspective, the present invention not only ensures the validity and synchronization of the wheel speed signals, but also meets the independence requirements by using software algorithms to diagnose the wheel speed signals and filtering out the correlation interference between the wheel speed signals through the four independent signal paths. The present invention provides a safety mechanism design that complies with functional safety standards, enhancing the speed and accuracy of wheel speed signal fault diagnosis. In the event of a functional downgrade, fault information is transmitted to the HMI, which is then displayed on the instrument panel to alert the driver, ensuring the system enters a safe state. (2) From a functional redundancy perspective, four wheel speed sensor interfaces are connected to four independent sensor circuits, with the corresponding wheel speed signals processed redundantly by two MCUs. Even if one wheel speed sensor or acquisition circuit fails, the signals from the remaining three wheel speed sensors remain valid. Even if one MCU fails, the validity of the four wheel speed signals is still ensured. The present invention not only meets the functional safety and redundancy requirements of the braking system but also reduces the overall cost of the vehicle's brake electronic control unit system.

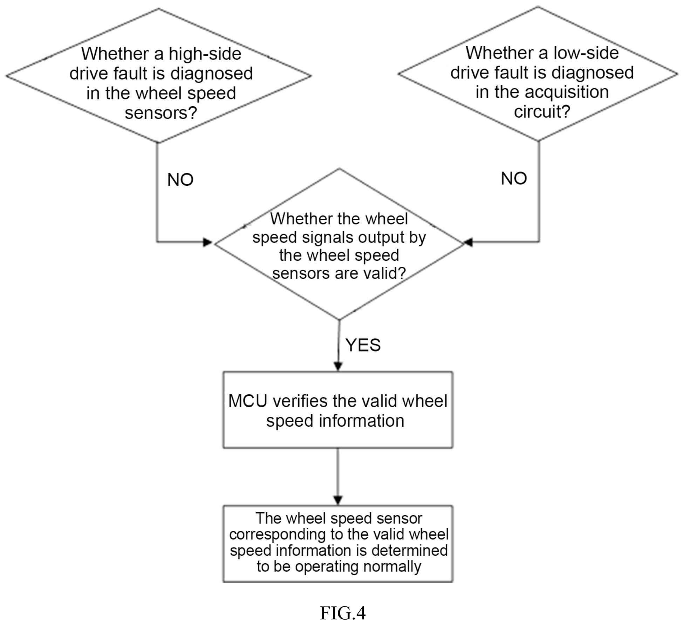

FIG. 4 is a flowchart of an independent redundant wheel speed processing method according to an embodiment of the present invention. The method specifically includes the following steps:
S1. collecting high-side voltage signals of the four wheel speed sensors 1,2,3,4 and output signals from the acquisition circuits, performing high-side drive fault diagnostics on the wheel speed sensors 1,2,3,4 based on the high-side voltage signals, and performing low-side drive fault diagnostics on the acquisition circuits based on the output signals of the acquisition circuits;
S2. upon a high-side drive fault or a low-side drive fault being verified, determining a corresponding wheel speed sensor fault; upon neither high-side drive fault nor low-side drive fault being verified in the wheel speed sensors 1,2,3,4, proceeding to step S3;
S3. detecting the validity of wheel speed information output by the wheel speed sensors 1,2,3,4, upon the wheel speed information being valid, proceeding to step S4; upon the wheel speed information being invalid, determining that both status and signal of the wheel speed sensor corresponding to invalid wheel speed information are faulty;
S4. performing a verification process on valid wheel speed information by the MCU 9, upon detecting a failed wheel speed signal, determining that the wheel speed sensor corresponding to the failed wheel speed signal is faulty.

The present invention has been described by way of example, and it is apparent that the specific implementation of the present invention is not limited to the described embodiments. Any non-substantial improvements made based on the conceptual approach and technical solutions of the present invention, or the direct application of the concept and technical solutions of the present invention to other scenarios without modification, are all within the scope of protection of the present invention.

## Claims

1. An independent redundant wheel speed processing system, comprising:
four wheel speed sensors (1,2,3,4) respectively disposed on four wheels; and
four wheel speed signal processing units (11,21,31,41), wherein the four wheel speed sensors (1,2,3,4) are respectively in communication with an MCU (9) through the four wheel speed signal processing units (11,21,31,41);
wherein each of the four wheel speed signal processing units (11,21,31,41) diagnoses drive abnormalities and wheel speed signal abnormalities of one of the four wheel speed sensors (1,2,3,4), and transmits diagnostic results as well as valid wheel speed signals output by the one of the wheel speed sensors (1,2,3,4) to the MCU (9).

2. The system according to claim 1, wherein each of the four wheel speed signal processing units (11,21,31,41) comprises a drive diagnostic module which diagnoses the drive abnormalities of the one of the wheel speed sensors (1,2,3,4), wherein the drive diagnostic module comprises a high-side drive diagnostic submodule and a low-side drive diagnostic submodule;
wherein the high-side drive diagnostic submodule performs a high-side drive fault diagnostic on the one of the wheel speed sensors (1,2,3,4) based on a high-side voltage;
wherein the low-side drive diagnostic submodule performs a fault diagnostic on output signals of the one of the wheel speed sensors (1,2,3,4) based on an acquisition circuit, wherein the acquisition circuit and a power supply circuit are independently connected to the one of the wheel speed sensors (1,2,3,4), wherein the power supply circuit provides power to the one of the wheel speed sensors (1,2,3,4), and the acquisition circuit acquires wheel speed signals.

3. The system according to claim 2, wherein a method for performing the high-side drive fault diagnostic comprises:
providing an ADC sampling circuit on a high side of each of the wheel speed sensors (1,2,3,4) to sample an ADC value of a voltage of the wheel speed sensor, verifying an operating voltage corresponding to the sampled ADC value with a reference voltage output by the MCU (9) to determine whether the operating voltage of the wheel speed sensor falls within a valid operating voltage range, upon the operating voltage of the wheel speed sensor being within the valid operating voltage range, a high-side drive of the wheel speed sensor is deemed to be normal.

4. The system according to claim 1, wherein each of the wheel speed signal processing units (11,21,31,41) comprises a wheel speed diagnostic module which diagnoses the wheel speed signal abnormalities, and a method for diagnosing the wheel speed signal abnormalities comprises:
providing an interface for inputting wheel speed pulse signals from the one of the wheel speed sensors (1,2,3,4), providing an ADC acquisition circuit at the interface to acquire the wheel speed pulse signals, diagnosing amplitudes of the wheel speed pulse signals, upon the amplitudes of the wheel speed pulse signals falling within a preset amplitude range, the wheel speed signals output by the one of the wheel speed sensors (1,2,3,4) are deemed valid.

5. The system according to claim 1, wherein the MCU (9) integrates a wheel speed signal verification module which receives the valid wheel speed signals sent by the four wheel speed signal processing units (11,21,31,41) and performs a verification process on the valid wheel speed signals.

6. The system according to claim 5, wherein a method for performing the verification process on the valid wheel speed signals comprises:
reading the valid wheel speed signals during steady driving, examining deviations between the valid wheel speed signals, upon the deviations between one of the valid wheel speed signals and each of the remaining wheel speed signals exceeding a preset deviation threshold, the corresponding valid wheel speed signal is determined to be faulty.

7. The system according to claim 1, further comprising:
two MCUs, wherein the two MCUs comprise a main MCU (91) and a secondary MCU (92), wherein output terminals of the four wheel speed signal processing units (11,21,31,41) are connected to the main MCU (91) and the secondary MCU (92);
wherein the main MCU (91) and the secondary MCU (92) respectively calculate first and second computed wheel speed signals of the wheel speed sensors (1,2,3,4) based on valid wheel speed pulse signals output by a wheel speed signal verification module.

8. The system according to claim 7, wherein:
the secondary MCU (92) transmits the second computed wheel speed signals of the wheel speed sensors (1,2,3,4) to the main MCU (91), upon the first computed wheel speed signals and the second computed wheel speed signals matching, the main MCU (91) is determined to be operating normally.

9. An independent redundant wheel speed processing method based on the independent redundant wheel speed processing system according to any one of claims 1 to 8, comprising:
S1. collecting high-side voltage signals of the four wheel speed sensors (1,2,3,4) and output signals from the acquisition circuits, performing high-side drive fault diagnostics on the wheel speed sensors (1,2,3,4) based on the high-side voltage signals, and performing low-side drive fault diagnostics on the acquisition circuits based on the output signals of the acquisition circuits;
S2. upon a high-side drive fault or a low-side drive fault being verified, determining a corresponding wheel speed sensor fault; upon neither high-side drive fault nor low-side drive fault being verified in the wheel speed sensors (1,2,3,4), proceeding to step S3;
S3. detecting the validity of wheel speed information output by the wheel speed sensors (1,2,3,4), upon the wheel speed information being valid, proceeding to step S4; upon the wheel speed information being invalid, determining that both status and signal of the wheel speed sensor corresponding to invalid wheel speed information are faulty;
S4. performing a verification process on valid wheel speed information by the MCU (9), upon detecting a failed wheel speed signal, determining that the wheel speed sensor corresponding to the failed wheel speed signal is faulty.
